# EUROPEAN PATENT APPLICATION

(11) **EP 4 752 502 A1**
(43) Date of publication of application: **03.06.2026**
(21) Application number: 24216384.8
(22) Date of filing: 29.11.2024
(51) Int. Cl.: G01C 15/00, G01B 11/00, G01S 17/42, G01S 17/66

(54) **MOBILE TARGET WITH IMPROVED ABSOLUTE POSITION AND ORIENTATION DETERMINATION**

(71) Applicant: LEICA GEOSYSTEMS AG, 9435 Heerbrugg (CH)
(72) Inventor: MÜLLER, Benjamin, 9435 Oberuzwil (CH); SCHÖLL, Benjamin, 9220 Bischofszell (CH); SPRENGER, Bernhard, 9443 Widnau (CH)
(74) Representative: Kaminski Harmann

(57) **Abstract**

The present invention relates to a mobile target 1, provided to be aimed at and tracked by a geodetic measuring instrument 12, so that an actual absolute position 16 of the mobile target 1 is determinable related to an absolute position of the geodetic measuring instrument 12. The mobile target 1 is configured to be arranged on a motion unit 11, the motion unit 11 being provided to move through an environment 14. The mobile target 1 comprises a reflecting element 2, an inertial measurement unit (IMU) 3, a receiving unit 4, configured to receive first position data sent by the geodetic measuring instrument 12 with regard to the actual absolute position 16 of the mobile target 1, a computing unit 5, configured to continuously determine an actual relative position 15 and orientation of the mobile target 1 in the environment 14 based on the IMU data, wherein the actual absolute position 16 based on the first position data is used as a drift-corrector, and a data and/or power interface 6, configured to interact for data and/or power transmission with a corresponding data and/or power interface of the motion unit 11. Further, a housing 7 of the mobile target 1 comprises the reflective element 2, the IMU 3, the receiving unit 4, the computing unit 5 and the data and/or power interface 6.

## Description

### FIELD OF THE INVENTION

The present invention relates to a mobile target, provided to be aimed at and tracked by a geodetic measuring instrument and configured to be arranged on a motion unit, the motion unit being provided to move through an environment.

### BACKGROUND OF THE INVENTION

Prior art smart targets comprising an inertial measurement unit (IMU) in addition to the reflector, in particular a retroreflector, for example to determine the orientation of the target in three-dimensional space, are described for example in the publication EP 2 722 647 A1.

However, a disadvantage of the known arrangement of the IMU separately from the reflector is that, on the one hand, the arrangement of the IMU in relation to the reflector can be varied and thus a new calibration must be carried out after every change to the position of the IMU in relation to the reflector to ensure that the orientation of the reflector is still accurately determinable. Furthermore, several components have to be mounted when installing the smart target, which makes installation more complex and error-prone.

Furthermore, the application of such prior art smart targets for monitoring a trajectory of a motion unit, such as a robotic arm or a construction vehicle, is also disadvantageous because, if during the tracking of the reflector of the smart target by a geodetic measuring instrument, e.g. a total station, an interruption of the tracking process occurs, e.g. due to a passing obstacle, and thus the targeting of the reflector is lost, the moving unit and thus also the smart target continues to move forward, the total station initially has no information about the actual position and orientation of the reflector, which is why the total station then has to search for the smart target again in order to be able to aim and track it again. This means that the trajectory cannot be captured for this period. Reliable and complete monitoring of the motion unit's trajectory is therefore not guaranteed with prior art smart targets.

### OBJECT OF THE INVENTION

It is therefore an object of the invention to provide a mobile target that solves the disadvantages of the prior art.

Another object of the invention is to provide a system that solves the disadvantages of the prior art.

Another object of the invention is to provide a mobile target whose position and orientation can be determined reliably, accurately and continuously.

Another object of the invention is to provide a mobile target that allows easy and error-free assembly.

These objects are achieved by realizing at least part of the features of the independent claims. Features which further develop the invention in an alternative or advantageous manner are described in the dependent patent claims.

### SUMMARY OF THE INVENTION

The present invention relates to a mobile target, provided to be aimed at and tracked by a geodetic measuring instrument, in particular a theodolite or total station, so that an actual absolute position of the mobile target is determinable related to an absolute position of the geodetic measuring instrument. The mobile target is configured to be arranged on a motion unit, the motion unit being provided to move through an environment, so that the mobile target is also movable through the environment.

The mobile target comprises a reflecting element, in particular a retro-reflecting element (e.g. a retro-reflective tape target or a retro-reflective (triple) prism or a cat eye reflector), configured to reflect a measuring beam emitted by the geodetic measuring instrument for aiming at the mobile target back to the geodetic measuring instrument, and an inertial measurement unit (IMU), for recording IMU data related to the mobile target.

The mobile target also comprises a receiving unit, configured to receive first position data sent by the geodetic measuring instrument with regard to the actual absolute position of the mobile target, a computing unit, configured to continuously determine an actual relative position and orientation of the mobile target in the environment based on the IMU data (also called pose estimation), wherein the actual absolute position based on the first position data is used as a drift-corrector, and a data and/or power interface, configured to interact for data and/or power transmission with a corresponding data and/or power interface of the motion unit (in other words, a real time interface to stream data from the mobile target to the motion unit).

Further, a housing of the mobile target comprises the reflective element, the IMU, the receiving unit, the computing unit and the data and/or power interface.

In the following description text, the terms "absolute position of the mobile target", "relative position and orientation respectively relative pose of the mobile target" and "absolute pose of the mobile target" are used, which are briefly explained below. The absolute position of the mobile target is determined by the geodetic measuring instrument, which requires a line of sight between the geodetic measuring instrument and the mobile target. The relative pose of the mobile target is determined by the fusion of data from relative sensors, such as the IMU, for which no line of sight between the geodetic measuring instrument and the mobile target is required. The absolute pose of the mobile target is determined based on a fusion of the absolute position of the mobile target with the relative pose of the mobile target.

Thus, the inventive mobile target is able to carry on determining its relative pose (i.e. estimating its absolute pose) without the absolute positioning signal from the geodetic measuring instrument. This allows the geodetic measuring instrument to extrapolate / upscale the absolute pose of the mobile target based on a fusion of the absolute position of the mobile target provided by the geodetic measuring instrument itself with the relative pose (pose estimation) of the mobile target provided by the mobile target. This upscaling allows a very fast and accurate determination of the absolute pose of the mobile target and thus also a reliable relock of the geodetic measuring instrument on the mobile target after a loss of lock. In other words, the first position data can be enhanced with the IMU data (or even with sensor data of one or more additional sensors) to quickly and accurately determine the absolute pose of the mobile target.

Further, the first position data, the IMU data and/or the position and orientation data are available directly on the motion unit, which enables faster processing in a computing unit of the motion unit.

Since the mobile target is arranged on the motion unit, the pose of the motion unit can also be determined and tracked by determining the pose of the mobile target together with information regarding the arrangement of the mobile target on the motion unit.

The configuration of the mobile target with a housing that comprises the reflective element, the IMU, the receiving unit, the computing unit and the data and/or power interface also has the following advantages:
- the distance/orientation between the reflective target and the IMU is always the same and known, which means that the IMU only needs to be calibrated once, whereas in the case of a state of the art smart target setup in which the IMU is a separate unit from the target (e.g. used in smart poles), there is no guarantee that the distance/orientation between the reflector and the IMU will always be the same (e.g. the IMU could slip, be adjusted, temporarily removed, etc.), which is why a new calibration must be carried out after every change to the position of the IMU in relation to the reflector to ensure that the relative position and orientation (estimated pose) of the reflector is still accurately determined;
- easier and more reliable installation of the mobile target on the motion unit by the installer, as the target can be arranged as a whole on the motion unit and the reflector and IMU do not have to be attached separately. This saves work steps during installation and the installation is also less prone to errors, as no units can be forgotten or attached incorrectly (e.g. with the wrong orientation);
- better protection of all parts thanks to a robust housing and compact design; individual parts cannot fall down;
- communication or data traffic between the components installed in the mobile target (e.g. between the IMU, the receiving unit, the computing unit and the data and/or power interface) can take place over short distances, which is why no signal interference can occur in the case of wireless connections, whereas with a prior art smart target where, for example, the IMU is located outside the housing of the reflector, a wireless connection has to cover a greater range and is therefore more susceptible to interference;
- if the communication or data traffic takes place via a wired connection between the units, the cables are installed inside the housing and do not hang on the outside of the target between the individual units and thus cannot get tangled up there;
- one power source for all units in the mobile target;
- less weight, as one housing is used for all units, which also saves production steps and components/materials.

The term housing is understood to mean a solid, protective casing for the individual components of the mobile target, wherein the housing is dimensioned and if necessary connected with the individual components in such a way that these components can no longer move (or can only move to a desired extent). Furthermore, the housing must also be shaped in such a way that the reflective element can still be targeted with a measuring beam of the geodetic measuring instrument.

The geodetic measuring instrument, often also called a Terrestrial Absolute Positioning System (TAPS), serves as an absolute pose or positioning system, which can be referenced to a local or a global coordinate system (e.g. with reference targets/prisms or GNSS). The TAPS can be configured, for example, for indoor and outdoor use and for a long-range application up to several hundred meters, e.g. 200 m to 500 m.

Accordingly, the mobile target according to the invention can be configured for closed-loop applications and dynamic measurements, which make the mobile target particularly usable for robotics, high-precision positioning or highly dynamic measurement applications in the accuracy range of the TAPS signal. Closed-Loop applications need a more reliable data-stream and low latency to have a high phase margin in the control loop. But most important is a good time synchronization between all the sensors to increase dynamic accuracy.

In other words, the mobile target includes a computing unit, which runs, for example, a real time algorithm to calculate its own pose estimation (determine the actual relative position and orientation of the mobile target in the environment) related to, for example, the absolute position of the mobile target determined by the TAPS and/or the absolute position of the TAPS itself. The IMU data can be used to upscale the measurement frequency of the TAPS and the corresponding frequency limitation as well as increase the phase margin and Nyquist frequency.

The mobile target also allows to stream raw data or pre-processed data of all connected devices to each other. The pose estimation is defined as the 6-DOF information of position and orientation. In addition the speed and acceleration in each dimension of freedom, resulting in up to 18 values (refer to the table below). Every combination or abstraction of the 18 values is included in this definition, such as the following examples: x-y-z (3D coordinates), x-y-yaw (2D plane with orientation), x-y-z-roll-pitch-yaw (6-DOF position), etc. Each value can optionally include a covariance, wherein the covariance is the estimated accuracy of the corresponding value of the pose estimation. In addition, a reliability of the covariance can help furthermore to weight a corresponding sensor signal in the multi-sensor fusion.

| **Position** | **Speed** | **Acceleration** |
|---|---|---|
| (1) x | (7) vₓ | (13) aₓ |
| (2) y | (8) v_{y} | (14) a_{y} |
| (3) z | (9) v_{z} | (15) a_{z} |
| (4) roll | (10) ωᵣₒₗₗ | (16) αᵣₒₗₗ |
| (5) pitch | (11) ω_{pitch} | (17) α_{pitch} |
| (6) yaw | (12) ω_{yaw} | (18) α_{yaw} |

In an exemplary embodiment of the mobile target according to the invention, the mobile target and/or the motion unit can further comprise at least one sensor unit, wherein the at least one sensor unit can be configured as a global navigation satellite system (GNSS) receiver, such as a GPS antenna (with or without RTK to calculate global position, but also to improve the pose estimation when losing the line of sight), a camera system (e.g. including calibration and real time orientation algorithm), a visual inertial system (VIS), a time-of-flight camera system (e.g. including calibration and real time orientation algorithm), a light detection and ranging (LIDAR) system, a depth detection camera system, a radar system (mmWaver Radar), a barometer, or a magnetometer. Optionally, the housing of the mobile target can comprise the at least one sensor unit.

In a further exemplary embodiment of the mobile target according to the invention, if the mobile target comprises at least one sensor unit (8), the computing unit can be further configured to continuously determine the actual relative position and/or orientation of the mobile target in the environment based on sensor data gathered by the at least one sensor unit, and/or if the motion unit comprises at least one sensor unit, a computing unit of the motion unit is configured to continuously determine a further actual relative position and/or orientation of the mobile target in the environment based on the sensor data gathered by the at least one sensor unit, in particular wherein a determined further actual relative position and/or orientation of the mobile target in the environment is transmitted from the motion unit, in particular via the data and/or power interface, to the mobile target and is processed by the computing unit of the mobile target for the determination of the actual relative position and/or orientation of the mobile target in the environment.

In other words, the mobile target and/or the motion unit can be enhanced with other sensor to improve the pose estimation, time-sync optimization and drift reduction. In other words, for example, a mobile target and/or a motion unit including a camera with VIS or a Lidar with Simultaneous Localization and Mapping (SLAM) can improve the pose estimation and eliminate the (rotational) drift of the IMU. In other words, one or more additional sensors can enhance the mobile target to advantageously improve the accuracy and reliability of the determination of the actual relative position and orientation of the mobile target (pose estimation). Further, based on the sensors and the algorithm inside the mobile target, the mobile target can measure its absolute pose even when losing the absolute TAPS (dead reckoning). Depending on the sensor types inside the mobile target and/or the motion unit, the customer can carry on its task for a certain time with limited absolute pose accuracy. Optionally, the additional sensors can be used to optimize time-syncronization and/or drift reduction/drift correction. In other words, the motion unit can, for example, also send pose estimation data to the mobile target in order to guarantee a more stable and faster retargeting/rediscover (fast-relock) in dead-reckoning. The motion unit pose estimation is a supporting data source, as many more sensors can usually be installed on the motion unit and the pose estimation can be much more accurate (e.g. wheel odometry, dual-antenna GNSS, and other sensors).

In a further exemplary embodiment, the mobile target can further comprise an emitting unit, configured to emit position and orientation data comprising data relating to the actual relative position and orientation of the mobile target to a receiving unit of the geodetic measuring instrument. Optionally, the housing of the mobile target can further comprise the emitting unit.

One advantage of the configuration of the mobile target with emitting unit, receiving unit and data interface is the fact that this enables data to be exchanged from the geodetic measuring instrument to the mobile target, from the mobile target to the motion unit and from the motion unit back again and thus all the sensors of these devices are interconnected, which means that position determinations respectively pose determinations can be carried out more robustly and accurately. Further, for example, the mobile target is able to receive and send (stream) covariances of all sensor raw data and the calculated pose estimation to the TAPS and the motion unit.

In a further embodiment, the receiving unit and the emitting unit can be both comprised by a transceiver unit. Optionally, the transceiver unit can be configured as a radio transceiver.

Optionally, the TAPS can stream the data over a low latency connection to the mobile target, which can be 3D data or also 6-DOF data. A radio connection, if appropriately configured, can be used for time synchronization and (consistent bidirectional) data streaming to reduce latency and increase dynamic accuracy.

In a further embodiment, the receiving unit can be configured to receive time information related to the first position data. The emitting unit can be configured to emit time information related to the IMU data and/or the position and orientation data. Further, the computing unit can be configured to carry out a time synchronization (e.g. TSN, PTP, NTP or PPS) based on the time information related to the first position data and the time information related to the IMU data and/or the position and orientation data.

In a further embodiment, the computing unit can be configured to carry out a drift correction based on the drift corrector to correct a deviation of the actual relative position from the actual absolute position (caused by e.g. an IMU drift). The emitting unit can be configured to emit the position and orientation data further comprising data relating to such a corrected actual relative position to the receiving unit of the geodetic measuring instrument, so that, if, in particular during a motion of the mobile target through the environment, a targeting and tracking of the mobile target by the geodetic measuring instrument is interrupted, a re-targeting of the mobile target by the geodetic measuring instrument is enabled on the basis of the position and orientation data. Optionally, the re-targeting of the mobile target by the geodetic measuring instrument is enabled on the basis of the data relating to the corrected actual relative position.

In other words, the position and orientation data can be streamed to the TAPS to re-lock on the fly in case of a loss of lock as soon as the reflector can be tracked again. The essence of the dataflow is to have a robust and reliable system, even when the line-of-sight is interrupted, the TAPS gets all the possible information to relock as fast as possible, without manual relocking. Further, the focus is on high accuracy navigation as well as static and dynamic measurement with real-time pose information (pose estimation). It can be used indoor and outdoor as well as for semi-autonomous or human-less application.

In a further embodiment, the computing unit can be configured to, if the sensor unit is configured as GNSS receiver, in particular a GNSS antenna, carry out a time synchronization of time information related to the first position data, the IMU data, the position and orientation data, and/or the sensor data, to a GNSS global time. In other words, GNSS can also be used to synchronize all sensor to the GNSS global time.

In a further embodiment, the receiving unit can be configured to receive second position data sent by a further geodetic measuring instrument with regard to the actual absolute position of the mobile target, and the emitting unit can be configured to emit the position and orientation data to a receiving unit of the further geodetic measuring instrument.

In a further embodiment, the computing unit can be configured to process the first position data and the second position data and, based on such a processing, to provide an improved accuracy in determining the actual absolute position, wherein such an improved actual absolute position can be used as the drift corrector. The determination of whether this accuracy is improved or not can be, for example, based on a comparison of an accuracy value of the determination of the actual absolute position with a given / precalculated / pre-defined accuracy value. This comparison can optionally be carried out by the computing unit of the mobile target or a computing unit of the geodetic measuring instrument.

In a further embodiment, the mobile target can be configured such that, if the receiving unit receives an information signal, in particular during the movement of the mobile target through the environment, from the geodetic measuring instrument / device, that, the targeting and tracking of the mobile target by the geodetic measuring instrument / device is interrupted, and/or a first accuracy value for a determination of the actual absolute position of the mobile target falls below a first predefined accuracy value, and/orthe computing unit, that a second accuracy value for a determination of the actual relative position and orientation of the mobile target in the environment falls below a second predefined accuracy value, and/or an input unit / user interface, that the targeting and tracking of the mobile target has to be carried out by the further geodetic measuring instrument (in other words a manual switchover from the first TAPS to the further TAPS), the emitting unit emits a switch signal to the receiving unit of the further geodetic measuring instrument. The switch signal is provided to trigger the further geodetic measuring instrument to carry out the targeting and tracking of the mobile target. Optionally, the targeting of the mobile target by the further geodetic measuring instrument can be enabled on the basis of the position and orientation data, in particular on the basis of the data relating to the corrected actual relative position. Optionally, the comparison of the first accuracy value with the first predefined accuracy value is carried out by a computing unit of the geodetic measuring instrument and/or the comparison of the second accuracy value with the second predefined accuracy value is carried out by the computing unit of the mobile target. Optionally, the input unit / user interface can be comprised by the mobile target or can be separated from the mobile target, wherein the input unit / user interface is configured to exchange signal data with the receiving unit of the mobile target.

In other words, the mobile target is capable to connect to multiple TAPS to increase accuracy, redundance, robustness and guaranty a flawless absolute pose determination in case of line-of-sight interruption of another TAPS. This can also be used to reposition a TAPS, lock onto the mobile target and estimate the relocated TAPS position based on the pose estimation of the mobile target (auto stationing).

In a further embodiment, the mobile target, in particular the housing of the mobile target, can comprise a mounting element configured to interact with a complementary mounting element of the motion unit to provide an arrangement of the mobile target on the motion unit.

In a further embodiment, a determination of the actual relative position and orientation of the mobile target in the environment can be carried out by the computing unit based on a (multi-) sensor fusion algorithm, in particular a state estimation algorithm or pose estimation algorithm.

For example, a Kalman filter can estimate errors of position, errors in velocity, errors in attitude, gyro biases and accelerometer biases (e.g. caused by a so-called IMU drift) based on the observed difference between the actual relative position and the actual absolute position of the mobile target, wherein the error (or drift) can then be corrected. Furthermore, a position of the mobile target determined by GNSS, for example, can optionally be included in this drift correction in order to improve the drift determination and, accordingly, the drift correction.

In other words, the mobile target can include a multi sensor data fusion algorithm to calculate the pose estimation of itself related to the absolute position. This can be streamed to the TAPS to improve tracking or to the motion unit.

In a further embodiment, the computing unit can be configured to continuously determine a speed and/or an acceleration of the mobile target based on the IMU data. The computing unit can be further configured to continuously determine the actual relative position and orientation of the mobile target in the environment based on the speed and/or the acceleration of the mobile target.

In a further embodiment, the computing unit can be configured to further determine vibrations of the mobile target, in particular during a motion of the mobile target through the environment, based on the IMU data, and provide an improved accuracy in determining the actual absolute position and/or the actual relative position based on the determined vibrations. The determination of whether this accuracy is improved or not can be, for example, based on a comparison of an accuracy value of the determination of the actual absolute position and/or the actual relative position with a given / precalculated / pre-defined accuracy value. This comparison can optionally be carried out by the computing unit of the mobile target or a computing unit of the geodetic measuring instrument. Optionally, the computing unit can be configured to determine inconsistencies in a motion pattern provided for the motion unit based on the determined vibrations.

In other words, the IMU in the mobile target furthermore indicates vibration of the system (mobile target and motion unit), which can be used to improve accuracy of the pose calculation and reliability calculation of other sensors, as well as an indicator of a potential misbehaviour of the motion unit.

In a further embodiment, the computing unit can be further configured to continuously determine the actual relative position and orientation of the mobile target in the environment based on the absolute position of the geodetic measuring instrument.

In a further embodiment, the motion unit can be configured as
- a robot, in particular a wheeled robot or a legged robot,
- a robotic swivel arm,
- a film camera,
- a construction machine, in particular a grader, an excavator, a dozer, a crane or a paver,
- a transport vehicle, in particular a car or a motorcycle, or
- an unmanned aerial vehicle.

In a further embodiment, if the reflective element is configured as a reflective prism, the computing unit can be configured to compensate for a prism error based on the first position data and/or the position and orientation data.

In other words, the TAPS data can be enhanced with IMU data or even with one or more additional sensor data to apply corrections (e.g. a prism correction). In particular, the mobile target is able to compensate the Prism error by knowing the TAPS and Prism orientation to each other and the corresponding systematic prism error.

In a further embodiment, the receiving unit can be configured to receive first orientation data determined and sent by the geodetic measuring instrument with regard to the actual relative orientation of the mobile target in the environment.

In other words, if the TAPS has also a 6-DOF target detection, the TAPS can stream the 6-DOF information relating to the mobile target to the receiving unit of the mobile target or to a receiving unit of the motion unit.

In a further embodiment, the mobile target comprises a target identification information being provided for identification of the mobile target by the geodetic measuring instrument, wherein the target identification information can be emitted to the receiving unit of the geodetic measuring instrument by means of the emitting unit, or can be derived by the geodetic measuring instrument from a comparison of a trajectory of the mobile target in the environment with trajectories of other mobile targets in the environment.

In other words, the mobile target includes a Target ID to identify and always track the right target, in particular the right prism. The Target ID can also be established by comparing the trajectories of the mobile target and the TAPS.

In a further embodiment, the emitting unit can be configured to emit the position and orientation data to the receiving unit of the geodetic measuring instrument, wherein an emitting unit of the geodetic measuring instrument can subsequently transmit said position and orientation data to a receiving unit of the motion unit.

In a further embodiment, the position and orientation data (the pose estimation data) can be streamed from the geodetic measuring instrument (TAPS) to the motion unit (not from the mobile target).

In a further embodiment, the first position data, the IMU data, the position and orientation data, and/or the sensor data, can be transmittable to the motion unit by means of the data and/or power interface interacting with the corresponding data and/or power interface of the motion unit, in particular wherein the data and/or power interface can be configured wired or wireless. Optionally, all the dataflow from and to the mobile target comprises covariances for each value.

In a further embodiment, the motion unit can be configured to determine an actual absolute position and/or an actual relative position and orientation of the motion unit in the environment based on transmitted first position data, IMU data, position and orientation data, and/or sensor data. Optionally, the motion unit can be configured to transmit the actual absolute position and/or actual relative position and orientation determined by the motion unit back to the mobile target by means of the interacting data and/or power interfaces, and the emitting unit of the mobile target can be configured to emit the actual absolute position and/or actual relative position and orientation determined by the motion unit to the receiving unit of the geodetic measuring instrument.

In other words, the mobile target has a bidirectional interfaces to the motion unit and the TAPS, to improve the pose estimation of the mobile target by receiving additional estimation from the motion unit, as well as enable additional calculation in the TAPS. All the interfaces allow high accurate time-synchronization and bidirectional low latency data stream for real time setups such as closed loop application or dynamic measurements. Further, the motion unit can stream back its own pose estimation to optimize the pose estimation of the mobile target in case of interruption of line of sight, to relock as fast as possible (or to never lose the lock).

The present invention further relates to a system for improved aiming and tracking of a mobile target, wherein the system comprises the mobile target according to one of the previous mentioned embodiments, a geodetic measuring instrument, in particular a theodolite or total station, provided to aim at and track the mobile target, so that an actual absolute position of the mobile target is determinable related to an absolute position of the geodetic measuring instrument, and a motion unit, wherein the mobile target is arranged on the motion unit, and the motion unit being provided to move through an environment, so that the mobile target is also moved through the environment.

The emitting / transfer / transmission / communication of position and orientation data, which comprise data relating to an actual/current relative position and orientation of the mobile target, (and optionally further data) to a receiving unit of the geodetic measuring instrument / device can be carried out by means of an emitting unit comprised by the mobile target, in particular by the housing of the mobile target, and/or by means of an emitting unit comprised by the motion unit.

In a further embodiment of the inventive system, data can be sent from the emitting unit of the mobile target to the receiving unit of the geodetic measuring instrument and then from an emitting unit of the geodetic measuring instrument to a receiving unit of the motion unit. This data transmission can take place via Ethernet or radio, for example.

### BRIEF DESCRIPTION OF THE DRAWINGS

The invention is illustrated in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
Fig. 1: show a schematic illustration of a prior art smart target;
Fig. 2A-B: show exemplary embodiments of the inventive mobile target;
Fig. 3: shows a schematic illustration of a tracking process carried out by the system according to the invention;
Fig. 4: shows a schematic illustration of a drift correction performed by the inventive system.

### DETAILED DESCRIPTION OF THE DRAWINGS

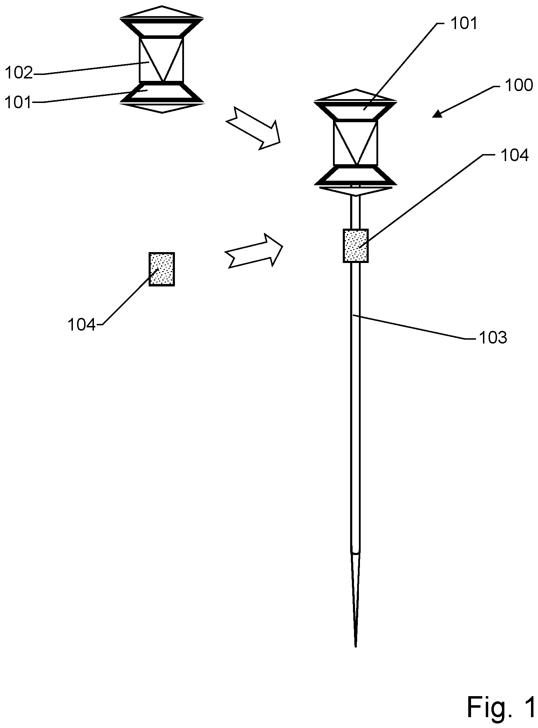

**Figure 1** shows a schematic illustration of a prior art smart target 100. In this smart target 100, the target 101 with the reflector 102, in particular the retroreflector 102, is mounted on a survey pole 103 in order to be able to determine the position of the contact point of the survey pole 103 with an object by determining the position of the target 102 using a geodetic measuring instrument, e.g. a total station. This smart target further has a separate IMU 104 also mounted on the survey pole 103.

The smart target 100 is configured for feeding a predefined filter algorithm with the repeatedly determined position of the target 101 and the repeatedly determined inertial state data and deriving therefrom referenced attitude data for the survey pole 103, taking into account the defined spatial relationship of the IMU relative to the reflector 102, and for using the referenced attitude data for deriving the position of the contact point.

What is not provided in this prior art smart target 100 is, among other things, the determination of a relative position and a relative orientation of the target 101 and an adjustment of the relative position to the absolute position of the target 101 determined by means of the total station in order to correct an IMU drift. Furthermore, due to the lack of relative position and relative orientation of the target 101, it is also not possible with this smart target 100 to perform a simplified or faster new targeting of the target 101 based on relative position and relative orientation after a loss of targeting of the target 101, which is why the prior art smart target 100 is only suitable for static or very slow surveying operations. It is therefore not possible to use the prior art smart target 100 to capture a trajectory of a motion unit equipped with the smart target 100 as completely as possible or to track the motion unit with the total station. Furthermore, the two-part structure of the prior art smart target 100 with an IMU 104 separate from the target 101 has the disadvantages mentioned above.

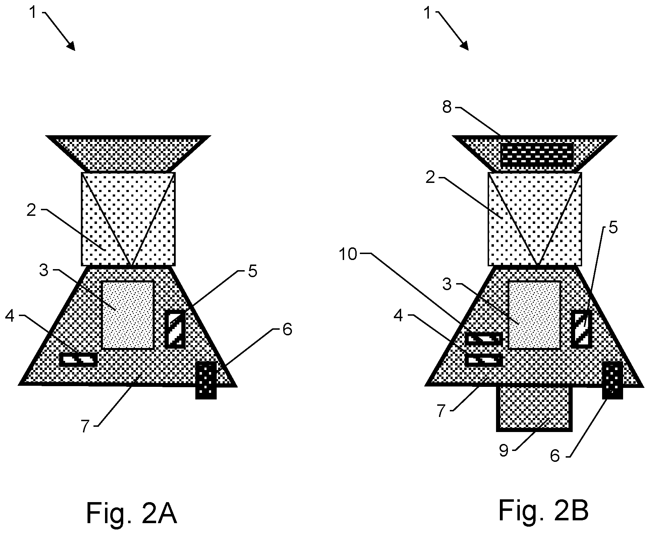

**Figure 2A** shows an exemplary embodiment of the inventive mobile target 1, wherein the mobile target 1 comprises the retro-reflective elements 2 configured as triple prisms, the IMU 3, the receiving unit 4, the computing unit 5 and the data and power interface 6, wherein these components 2-6 are comprised by the housing 7 of the mobile target 1.

The embodiment shown in **Figure 2B** also has the GNSS receiver 8, e.g. a GPS antenna, the mounting element 9 and the emitting unit 10, which are also comprised by the housing 7. In the embodiment shown, the mounting element 9 and the data and power interface 6 are designed as protruding elements which, when the mobile target 1 is arranged on a motion unit 11, e.g. a construction vehicle or a robot arm, can be inserted into corresponding counterpart recesses of the motion unit 11. The mounting element 9 can of course also have a different shape, e.g. a recess, a hook, etc., provided that a secure hold on the motion unit 11 is guaranteed. In the embodiment shown, the data and power interface 6 is designed as a type of USB connector (e.g. USB-C) that can be plugged into the corresponding USB mating connector of the motion unit 11. The data and power interface 6 can be configured differently as well, e.g. as Powerline Communication (PLC) or Digital Powerline (DPL) or as an inductive charging station that charges a battery in the mobile target 1, combined with a wireless radio connection for data transmission, such as (long-range) Bluetooth.

The emitting unit 10 is configured to transmit data via a wireless radio connection (e.g. to a correspondingly configured receiving unit of the geodetic measuring instrument 12) and the receiving unit 4 is configured to receive data provided via a wireless radio connection (e.g. from a correspondingly configured emitting unit of the geodetic measuring instrument 12).

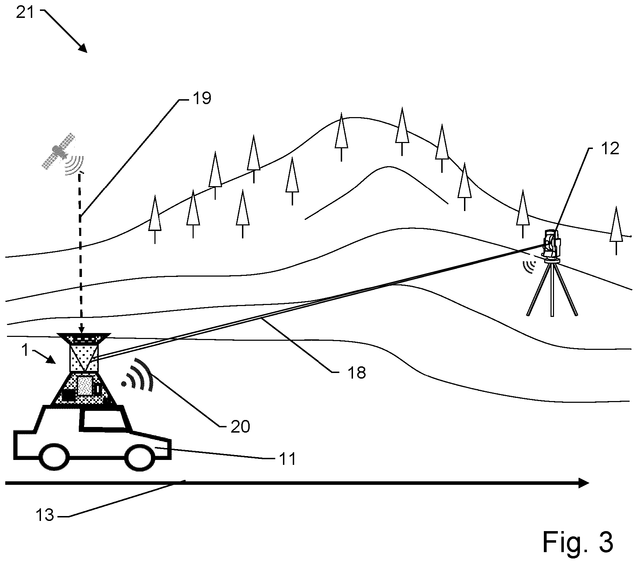

**Figure 3** shows a schematic illustration of a tracking process carried out by the system 21 according to the invention. The motion unit, configured as a car 11, is moved along the path 13 through the environment 14. Due to the fixed connection of the mobile target 1 to the car 11 by the mounting unit 9, the position or pose of the car 11 can then also be determined by determining the position or pose of the mobile target 1.

The total station 12 has aimed the retroreflector 2 of the mobile target 1 with its measuring beam 18, which is reflected back to the total station 12, so that the actual absolute position 16 of the mobile target 1 is determined based on the absolute posiition of the total station 12. This actual absolute position 16 is sent by an emitting unit/transmitting unit/sending unit of the total station to the receiving unit 4 of the mobile target 1.

In order to be able to continue following the route 13 of the mobile target 1 and thus also of the car 11 or to enable rapid re-aiming by the total station 12 even if the mobile target 1 loses its aim, e.g. due to a large obstacle in the field of view of the total station 12, the IMU 3 of the mobile target 1 records IMU data, wherein the computing unit determines a relative position 15 and a relative orientation of the mobile target based on this IMU data. Since the IMU 3 is affected by a so-called IMU drift (or gyro drift), a deviation of the current relative position 15 from the actual absolute position 16 occurs over time. A drift correction carried out by the computing unit 5, in which the actual absolute position 16 is used as a drift corrector, corrects the already occurring deviation of the relative position 15 from the absolute position 16. This corrected actual relative position 15 or corresponding position data is then transmitted by radio 20 from the emitting unit/transmitting unit/sending unit 10 of the mobile target 1 to a receiving unit of the total station 12, so that the total station 12 knows quite precisely where the mobile target 1 is currently located, even if the mobile target 1 is lost, making re-targeting easier.

Furthermore, the mobile target 1 has a GPS antenna 8, by means of which GPS data 19 can be received, by means of which a position of the mobile target can be determined and included in the drift correction in order to improve the drift correction.

The mobile target 1 is connected to the car 11 via the data and power interface 6, and is therefore supplied with power and can exchange data correspondingly. This means that data provided by the car 11, e.g. a relative position of the car 11, can be used to determine the relative position 15 of the mobile target 1 respectively for drift correction.

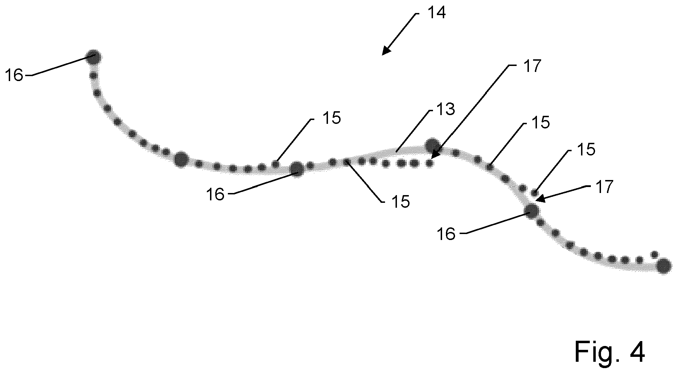

**Figure 4** shows a schematic illustration of a drift correction performed by the inventive system 21. The motion unit 11, e.g. a construction vehicle, moves along a trajectory 13 through the environment 14, e.g. a construction site, causing the mobile target 1 attached to the construction vehicle 11 to also move along this trajectory 13. During this movement, the mobile target 1 is targeted and tracked by a geodetic measuring instrument 12, e.g. a total station. The IMU 3 of the mobile target 1 permanently captures IMU data based on which an actual relative position 15 of the mobile target 1 in the environment 14 is continuously determined. Since the actual relative position 15 deviates from the actual absolute position 16, which is determined by means of the total station 12, after a certain distance has been covered due to the IMU drift, a drift correction based on the actual absolute position is carried out by means of a sensor fusion algorithm executed in the computing unit 5, which corrects the deviation 17 of the actual relative position 15 from the actual absolute position 16. After a further distance has been covered, the relative position 15 deviates again from the absolute position 16, which is why the drift correction described above is carried out again. This allows the trajectory of the mobile target 1 and thus also the trajectory 13 of the motion unit 11 to be recorded as accurately and completely as possible.

Although the invention is illustrated above, partly with reference to some preferred embodiments, it must be understood that numerous modifications and combinations of different features of the embodiments can be made. All of these modifications lie within the scope of the appended claims.

## Claims

1. Mobile target (1), provided to be aimed at and tracked by a geodetic measuring instrument (12), in particular a theodolite or total station, so that an actual absolute position (16) of the mobile target (1) is determinable related to an absolute position of the geodetic measuring instrument (12), wherein the mobile target (1) is configured to be arranged on a motion unit (11), the motion unit (11) being provided to move through an environment (14), so that the mobile target (1) is also movable through the environment (14), wherein the mobile target (1) comprises
• a reflecting element (2), configured to reflect a measuring beam emitted by the geodetic measuring instrument (12) for aiming at the mobile target (1) back to the geodetic measuring instrument (12),
• an inertial measurement unit (IMU) (3), for recording IMU data related to the mobile target (1),
• a receiving unit (4), configured to receive first position data sent by the geodetic measuring instrument (12) with regard to the actual absolute position (16) of the mobile target (1),
• a computing unit (5), configured to continuously determine an actual relative position (15) and orientation of the mobile target (1) in the environment (14) based on the IMU data, wherein the actual absolute position (16) based on the first position data is used as a drift-corrector, and
• a data and/or power interface (6), configured to interact for data and/or power transmission with a corresponding data and/or power interface of the motion unit (11),
wherein a housing (7) of the mobile target (1) comprises the reflective element (2), the IMU (3), the receiving unit (4), the computing unit (5) and the data and/or power interface (6).

2. Mobile target (1) according to claim 1, wherein the mobile target (1), in particular the housing (7) of the mobile target (1), and/or the motion unit (11) comprises at least one sensor unit (8), wherein the at least one sensor unit (8) is configured as
• a global navigation satellite system (GNSS) receiver,
• a visual inertial system (VIS),
• a time-of-flight camera system,
• a light detection and ranging (LIDAR) system,
• a depth detection camera system,
• a radar system,
• a barometer, or
• a magnetometer.

3. Mobile target (1) according to claim 2, wherein,
• if the mobile target (1) comprises at least one sensor unit (8), the computing unit (5) is further configured to continuously determine the actual relative position (15) and/or orientation of the mobile target (1) in the environment (14) based on sensor data gathered by the at least one sensor unit (8), and/or
• if the motion unit (11) comprises at least one sensor unit (8), a computing unit of the motion unit (11) is configured to continuously determine a further actual relative position and/or orientation of the mobile target (1) in the environment (14) based on the sensor data gathered by the at least one sensor unit (8), in particular wherein a determined further actual relative position and/or orientation of the mobile target (1) in the environment (14) is transmitted from the motion unit (11), in particular via the data and/or power interface, to the mobile target (1) and is processed by the computing unit (5) of the mobile target (1) for the determination of the actual relative position (15) and/or orientation of the mobile target (1) in the environment (14).

4. Mobile target (1) according to one of the preceding claims, wherein the mobile target (1) further comprises an emitting unit (10), configured to emit position and orientation data comprising data relating to the actual relative position (15) and orientation of the mobile target (1) to a receiving unit of the geodetic measuring instrument (12), in particular wherein the housing (7) of the mobile target (1) further comprises the emitting unit (10).

5. Mobile target (1) according to claim 4, wherein the receiving unit (4) and the emitting unit (10) are both comprised by a transceiver unit, in particular wherein the transceiver unit is configured as a radio transceiver.

6. Mobile target (1) according to claim 4 or 5, wherein
• the receiving unit (4) is configured to receive time information related to the first position data,
• the emitting unit (10) is configured to emit time information related to the IMU data and/or the position and orientation data, and
• the computing unit (5) is configured to carry out a time synchronization based on the time information related to the first position data and the time information related to the IMU data and/or the position and orientation data.

7. Mobile target (1) according to one of the claims 4 to 6, wherein the computing unit (5) is configured to carry out a drift correction based on the drift corrector to correct a deviation of the actual relative position (15) from the actual absolute position (16), wherein the emitting unit (10) is configured to emit the position and orientation data further comprising data relating to such a corrected actual relative position (15) to the receiving unit of the geodetic measuring instrument (12), so that, if, in particular during a motion of the mobile target (1) through the environment (14), a targeting and tracking of the mobile target (1) by the geodetic measuring instrument (12) is interrupted, a re-targeting of the mobile target (1) by the geodetic measuring instrument (12) is enabled on the basis of the position and orientation data, in particular on the basis of the data relating to the corrected actual relative position (15).

8. Mobile target (1) according to claims 3 and 6, wherein the computing unit (5) is configured to, if the sensor unit (8) is configured as GNSS receiver, carry out a time synchronization of time information related to
• the first position data,
• the IMU data,
• the position and orientation data, and/or
• the sensor data,
to a GNSS global time.

9. Mobile target (1) according to one of the claims 4 to 8, wherein
• the receiving unit (4) is configured to receive second position data sent by a further geodetic measuring instrument with regard to the actual absolute position (16) of the mobile target (1), and
• the emitting unit (10) is configured to emit the position and orientation data to a receiving unit of the further geodetic measuring instrument.

10. Mobile target (1) according to claim 9, wherein the computing unit (5) is configured to process the first position data and the second position data and, based on such a processing, to provide an improved accuracy in determining the actual absolute position (16), wherein such an improved actual absolute position (16) is used as the drift corrector.

11. Mobile target (1) according to claim 9 or 10, wherein the mobile target (1) is configured such that, if the receiving unit (4) receives an information signal, in particular during the movement of the mobile target (1) through the environment (14), from
• the geodetic measuring instrument (12), that
∘ the targeting and tracking of the mobile target (1) by the geodetic measuring instrument (12) is interrupted, and/or
∘ a first accuracy value for a determination of the actual absolute position (16) of the mobile target (1) falls below a first predefined accuracy value, and/or
• the computing unit (5), that a second accuracy value for a determination of the actual relative position (15) and orientation of the mobile target (1) in the environment (14) falls below a second predefined accuracy value, and/or
• an input unit, that the targeting and tracking of the mobile target (1) has to be carried out by the further geodetic measuring instrument, in particular wherein the input unit is comprised by the mobile target (1),
the emitting unit (10) emits a switch signal to the receiving unit of the further geodetic measuring instrument, wherein the switch signal is provided to trigger the further geodetic measuring instrument to carry out the targeting and tracking of the mobile target (1), in particular wherein the targeting of the mobile target (1) by the further geodetic measuring instrument is enabled on the basis of the position and orientation data, in particular on the basis of the data relating to the corrected actual relative position (15).

12. Mobile target (1) according to one of the preceding claims, wherein the mobile target (1), in particular the housing (7) of the mobile target (1), comprises a mounting element (9) configured to interact with a complementary mounting element of the motion unit (11) to provide an arrangement of the mobile target (1) on the motion unit (11).

13. Mobile target (1) according to one of the preceding claims, wherein a determination of the actual relative position (15) and orientation of the mobile target (1) in the environment (14) is carried out by the computing unit (5) based on a sensor fusion algorithm.

14. Mobile target (1) according to one of the preceding claims, wherein the computing unit (5) is configured to continuously determine a speed and/or an acceleration of the mobile target (1) based on the IMU data, wherein the computing unit (5) is further configured to continuously determine the actual relative position (15) and orientation of the mobile target (1) in the environment (14) based on the speed and/or the acceleration of the mobile target (1).

15. System (21) for improved aiming and tracking of a mobile target (1), wherein the system (21) comprises
• the mobile target (1) according to one of the claims 1 to 14,
• a geodetic measuring instrument (12), in particular a theodolite or total station, provided to aim at and track the mobile target (1), so that an actual absolute position (16) of the mobile target (1) is determinable related to an absolute position of the geodetic measuring instrument (12), and
• a motion unit (11), wherein
∘ the mobile target (1) is arranged on the motion unit (11), and
∘ the motion unit (11) being provided to move through an environment (14), so that the mobile target (1) is also moved through the environment (14).
